# EUROPÄISCHE PATENTANMELDUNG

(11) **EP 2 840 018 A1**
(43) Veröffentlichungstag der Anmeldung: **25.02.2015**
(21) Anmeldenummer: 13181188.7
(22) Anmeldetag: 21.08.2013
(51) Int. Cl.: B63G 8/08, B63H 21/00

(54) **Antriebssystem für ein Wasserfahrzeug, Verfahren zum Betrieb eines Antriebssystems sowie Wasserfahrzeug mit einem Antriebssystem**

(71) Anmelder: Siemens Aktiengesellschaft, 80333 München (DE)
(72) Erfinder: Hoffmann, Joachim, 90559 Burgthann (DE)

(57) **Zusammenfassung**

Ein Antriebssystem (2) für ein Wasserfahrzeug, insbesondere für ein Unterwasserfahrzeug U-Boot oder ein unbemanntes Unterwasserfahrzeug, umfasst eine Brennstoffzellenanlage (6), mindestens einen Betriebsgasbehälter (4) zum Versorgen der Brennstoffzellenanlage (6) mit einem Betriebsgas (B) sowie einen an einer Gasableitung (16) angeordneten Verdichter (14) zum Verdichten eines Restgases (R) aus der Brennstoffstellenanlage (6). Im Hinblick auf eine Verbesserung der Energiebilanz des Antriebssystems (2) ist eine zwischen dem Betriebsgasbehälter (4) und der Brennstoffzellenanlage (6) angeordnete Turbine (10) zum Entspannen des Betriebsgases (B) vor seinem Eintritt in die Brennstoffstellenanlage (6) vorgesehen, wobei der Verdichter (14) durch die Turbine (10) angetrieben wird.

## Beschreibung

Die Erfindung betrifft ein Antriebssystem für ein Wasserfahrzeug, insbesondere für ein Unterwasserfahrzeug wie ein U-Boot oder ein unbemanntes Unterwasserfahrzeug. Die Erfindung betrifft weiterhin ein Verfahren zum Betrieb eines solchen Antriebssystems sowie ein Wasserfahrzeug mit einem solchen Antriebssystem.

Unterwasserfahrzeuge, wie z.B. U-Boote, sind unter anderem mit Brennstoffzellenanlagen ausgestattet, durch welche Energie für den Betrieb des Fahrzeugs erzeugt wird. Die Brennstoffzellenanlage wird mit reinem Wasserstoff und Sauerstoff oder mit wasserstoff- bzw. sauerstoffhaltigen Gasen versorgt, welche die Betriebsgase sind. Es gibt mehrere Möglichkeiten die Betriebsgase Wasserstoff und Sauerstoff zu speichern, z.B. in Form von verflüssigten Gasen in Kryotanks, in Form von komprimierten Gasen in Druckbehältern oder ad-/absorbiert auf/in einem Trägermaterial, wie z.B. in einem Metallhydridspeicher.

Im Betrieb eines auf die Verbrennung von Wasserstoff und Sauerstoff basierten Antriebssystems eines Unterwasserfahrzeugs wird jedes Betriebsgas z.B. aus einem Betriebsgasbehälter, in dem es sich unter hohem Druck befindet, entnommen und in die Brennstoffzellenanlage geleitet. In der Brennstoffzellenanlage reagieren beide Betriebsgase zu Produktwasser ab. Verbleibende, unverbrannte Restgase treten aus einer Gasableitung der Brennstoffzellenanlage aus und müssen entsorgt werden. Die Entsorgung kann auf zweierlei Weise erfolgen: entweder durch Abgabe an die Atmosphäre bzw. Umgebung oder in geeignete Speicherbehälter. Diese Gasableitung funktioniert nur, wenn entweder ein ausreichendes Volumen für die Speicherbehälter zur Verfügung steht oder die umgebende Atmosphäre ein hinreichend großes Volumen einnimmt, damit die austretenden Gase verdünnt werden.

Im Falle eines Unterwasserfahrzeugs ist jedoch das Volumen begrenzt. Eine Ableitung des Restgases ins Wasser ist auch nicht ohne weiteres möglich, denn das Restgas u. U. gegen den außenseitig anstehenden hydrostatischen Druck aus dem Inneren des Unterwasserfahrzeuges hinausgeleitet werden müssen. Wenn der Betriebsdruck der Brennstoffzellenanlage hierzu nicht ausreichend groß ist, wird das Restgas verdichtet. Als Verdichter werden in der Regel elektrisch angetriebene Maschinen eingesetzt, die jedoch einen Teil der in der Brennstoffzellenanlage generierten elektrischen Energie verbrauchen.

Der Erfindung liegt daher die Aufgabe zugrunde, die Energiebilanz eines Antriebssystems eines Unterwasserfahrzeugs zu verbessern.

Die Aufgabe wird erfindungsgemäß gelöst durch ein Antriebssystem für ein Wasserfahrzeug, insbesondere für ein Unterwasserfahrzeug wie ein U-Boot oder ein unbemanntes Unterwasserfahrzeug, umfassend eine Brennstoffzellenanlage, mindestens einen Betriebsgasbehälter zum Versorgen der Brennstoffzellenanlage mit einem Betriebsgas, eine zwischen dem Betriebsgasbehälter und der Brennstoffzellenanlage angeordnete Turbine zum Entspannen des Betriebsgases vor seinem Eintritt in die Brennstoffstellenanlage sowie einen Verdichter zum Verdichten eins Restgases aus der Brennstoffstellenanlage, wobei der Verdichter und die Turbine ein gemeinsames Getriebesystem.

Die Aufgabe wird zudem erfindungsgemäß gelöst durch ein Verfahren zum Betrieb eines Antriebssystems für Wasserfahrzeug, insbesondere für ein Unterwasserfahrzeug wie ein U-Boot oder ein unbemanntes Unterwasserfahrzeug, wobei ein Betriebsgas aus mindestens einem Betriebsgasbehälter in einer Turbine entspannt wird, das entspannte Betriebsgas anschließend in eine Brennstoffzellenanlage zum Verbrennen eingeleitet wird, nach der Verbrennung des Betriebsgases in der Brennstoffzellenanlage Restgas aus der Brennstoffzellenanlage abgeleitet und mittels eines Verdichters verdichtet wird, wobei der Verdichter durch die Turbine angetrieben wird.

Die Aufgabe wird schließlich erfindungsgemäß gelöst durch ein Wasserfahrzeug, insbesondere ein Unterwasserfahrzeug wie ein U-Boot oder ein unbemanntes Unterwasserfahrzeug, mit dem oben beschriebenen Antriebssystem.

Die in Bezug auf das Antriebssystem nachstehend angeführten Vorteile und bevorzugten Ausgestaltungen lassen sich sinngemäß auf das Verfahren zum Betrieb eines Antriebssystems sowie auf das Wasserfahrzeug mit einem solchen Antriebssystem übertragen.

Unter Wasserfahrzeug wird hierbei sowohl ein Überwasserfahrzeug wie ein Schiff oder ein Unterwasserfahrzeug wie U-Boot oder ein unbemanntes Unterwasserfahrzeug verstanden.

Die Erfindung basiert auf der Idee das Betriebsgas nach dem Betriebsgasbehälter zu entspannen und die Entspannungsarbeit zu nutzen, um über das Getriebesystem den Verdichter über die Dreharbeit der Turbine anzutreiben. Auf diese Weise wird auf einen elektrisch angetriebenen Motor für den Verdichter verzichtet, so dass insgesamt weniger elektrische Energie verbraucht wird. Das Getriebesystem umfasst hierbei insbesondere auch ein Übersetzungsgetriebe, das zwischen der Entspannungsturbine und dem Verdichter angeordnet ist. Denkbar ist auch die Anordnung der Turbine und des Verdichters an einer gemeinsamen Welle.

Im Betrieb tritt mehr Betriebsgas in die Brennstoffzellenanlage ein, als das Restgas, das aus der Brennstoffzellenanlage herauskommt. In der Regel werden in einer kaskadierten Brennstoffzellenanordnung ca. 99% der Betriebsgase intern umgesetzt und nur ca. 1% von den Betriebsgasen tritt als Restgas heraus. Diese Restgasmenge lässt sich über den Entspannungs-Verdichter-Prozess relativ einfach auf ein erforderliches Druckniveau anheben und aus dem Unterwasserfahrzeug in das umgebende Meer befördern.

Bevorzugt weist das Betriebsgas vor der Turbine einen Druck von mindestens ca. 200 bar, ca. 350, insbesondere ca. 700 und nach der Turbine einen Druck von ca. 5-10 bar auf. Hierzu sind auf der Wasserstoffseite Druckspeicherbehälter mit einem anfänglichen Fülldruck von ca. 350 bar vorgesehen. Für die Sauerstoffseite sind Druckspeicherbehälter mit einem Druck insbesondere zwischen 200 und 350 bar erforderlich. Es ist auch möglich auf der Wasserstoff- und/oder Sauerstoffseite auch Sonderbehälter mit einem Druck bis 700 bar einzusetzen. Je nach eingesetztem Behälter kann ein unterschiedlicher anfänglicher Druck auf der Wasserstoffseite und der Sauerstoffseite herrschen. Dieser Druck fällt mit zunehmendem Verbrauch des jeweiligen Betriebsgases ab. Bis zu einem unteren Wert, insbesondere bis ca. 20-50 bar, lässt sich der Verdichtungsbetrieb sinnvoll betreiben. Da das Verhältnis zwischen der entspannten Menge an Betriebsgas und der verdichteten Menge an Restgas ca. 100:1 ist, steht auch im unteren Druckbereich für den anfänglichen Druck des Betriebsgases genügend Energie zum Betrieb des Verdichters zur Verfügung.

Vorzugsweise ist zwischen dem Betriebsgasbehälter und der Turbine eine Entspannungsvorrichtung zur Vorentspannung des Betriebsgases auf einen Druck zwischen 20 bar und 50 bar angeordnet. Diese Anordnung hat den Vorteil, dass über einen weiteren Bereich einen konstanten Vordruck auf der Entspannungsseite aufgebaut wird, der vom anfänglichen Druck des Betriebsgases unabhängig ist.

Zweckdienlicherweise weist das verdichtete Restgas einen Druck von ca. 5-50 bar auf. Dieses Druckniveau ist ausreichend, um das Restgas bei einer für ein Unterwasserfahrzeug üblichen Tauchtiefe, insbesondere bei einer Tauchtiefe von 50-500 m aus dem Unterwasserfahrzeug in das umgebende Meereswasser zu befördern.

Nach einer bevorzugten Variante ist an der Gasableitung ein Gasbehälter für das Restgas vorgesehen. Der Gasbehälter ist insbesondere als Druckbehälter ausgebildet und dem Verdichter nachgeschaltet, um das komprimierte Restgas aufzunehmen. Der Gasbehälter ist alternativ dem Verdichter vorgeschaltet, so dass eine ausreichende Menge an Restgas angesammelt wird, bevor dieses verdichtet wird.

Nach einer weiteren bevorzugten Variante wird das verdichtete Restgas aus dem Unterwasserfahrzeugs hinausgeleitet, indem die Gasableitung, an welcher der Verdichter angeordnet ist, außerhalb des Unterwasserfahrzeugs mündet.

Vorteilhafterweise ist ein elektrischer Generator mit der Turbine gekoppelt und wird durch die Turbine angetrieben. Somit wird die überschüssige mechanische Energie in elektrische Energie umgewandelt, die z.B. die Brennstoffzellenanlage entlasten könnte und in Notfällen könnte über den Generator Strom erzeugt werden, solange der Druck auf der Eingangsseite der Turbine ausreichend hoch ist. Insbesondere ist der Generator derart ausgestaltet, dass seine Leistung mit abnehmendem Druck ebenfalls reduziert wird.

Die überschüssige mechanische Energie der Turbine wird zudem zur direkten Antriebsunterstützung eingesetzt, indem die Turbine zweckdienlicherweise mit einem Antriebspropeller des Fahrzeugs gekoppelt ist. Möglich ist auch eine Kombination von einem direkt von der Turbine angetrieben Antriebspropeller und einem an der Turbine gekoppelten elektrischen Generator.

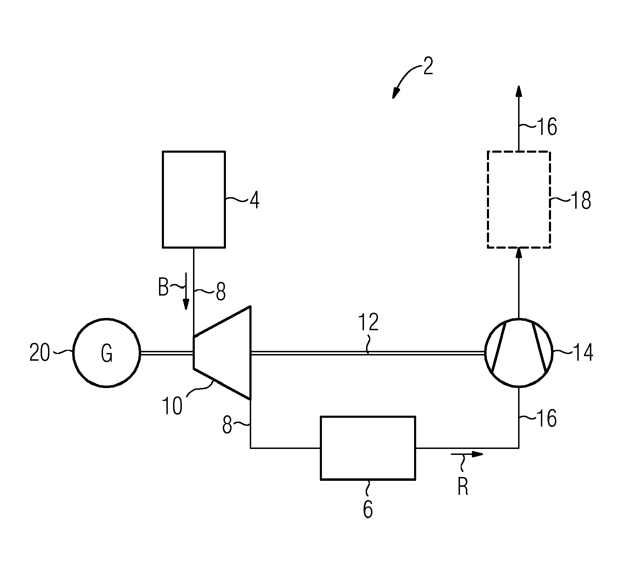

Ein Ausführungsbeispiel der Erfindung wird anhand einer Zeichnung näher erläutert. Hierin zeigt die einzige Figur schematisch ein Antriebssystem 2 für ein hier nicht näher dargestelltes Unterwasserfahrzeug, umfassend einen Betriebsgasbehälter 4 und eine Brennstoffzellenanlage 6. Der Betriebsgasbehälter 4 ist im gezeigten Ausführungsbeispiel ein Druckbehälter, in dem der Wasserstoff unter hohem Druck gelagert wird. Ein Betriebsgas B, insbesondere Wasserstoff, wird über eine Betriebsgasleitung 8 in die Brennstoffzellenanlage 6 geleitet, wo es mit dem anderen Betriebsgas, in diesem Fall Sauerstoff, abreagiert. Für das Betriebsgas Sauerstoff ist insbesondere ebenfalls ein Betriebsgasbehälter vorgesehen, der in der Figur jedoch nicht gezeigt ist.

Im Betriebsgasbehälter 4 befindet sich der Wasserstoff unter einem anfänglichen Druck zwischen 350 bar. An der Betriebsgasleitung 8 ist eine Turbine 10 angeordnet, durch welche der Wasserstoff auf dem Weg zur Brennstoffzellenanlage 6 strömt. In der Turbine 10 wird der Wasserstoff auf ca. 5-10 bar entspannt, bevor es der Brennstoffzellenanlage 6 zugeführt wird.

Die Turbine 10 weist Getriebesystem 12 auf, welches hierbei symbolisch als eine Turbinenwelle dargestellt ist, an der ebenfalls ein Verdichter 14 angeordnet ist. Der Verdichter 14 dient dazu, unverbrauchtes Restgas R aus der Brennstoffzellenanlage 6 zu komprimieren, um dieses gegen den Druck des Wassers, wenn das Unterwasserfahrzeug eingetaucht ist, ins Meerwasser fördern zu können. Mit Hilfe des Verdichters 14 wird das Restgas R auf ca. 5-20 bar verdichtet. Der Druck des verdichteten Restgases hängt dabei insbesondere von der Tauchtiefe ab. Der Verdichter 14 ist dabei an einer Gasableitung 16 angeordnet, über welche das Restgas R aus der Brennstoffzellenanlage 6 hinausgeleitet wird und die insbesondere außerhalb des Unterwasserfahrzeugs mündet.

In der Figur ist zudem mit gestrichelter Linie ein weiterer, dem Verdichter 14 nachgeschalterer Gasbehälter 18 angedeutet, der optional in der Gasableitung 16 integriert werden kann. Der Gasbehälter 18 dient zur internen Speicherung des Restgases R, bevor es aus dem Unterwasserfahrzeug abgeleitet wird. Alternativ kann die Gasableitung 16 nur bis zum Gasbehälter 18 führen, so dass jegliches in der Brennstoffzellenanlage 6 entstandene Restgas R am Bord des Unterwasserfahrzeugs im Gasbehälter 18 unter hohem Druck gelagert wird, bis der Gasbehälter 18 entleert oder ausgetauscht werden kann.

Im gezeigten Ausführungsbeispiel wird die überschüssige mechanische Energie der Turbine zudem verwendet, um einen elektrischen Generator 20 anzutreiben, der im Energiesystem des Unterwasserfahrzeugs integriert ist. Die Turbine 10 kann zudem für direkte Antriebsunterstützung eingesetzt werden, indem sie z.B. mechanisch mit einem hier nicht näher gezeigten Antriebspropeller verbunden ist.

Durch die Ankopplung der Turbine 10 mit dem Verdichter 14 zeichnet sich das Antriebssystem 2 durch eine hohe Energieeffizienz aus, da kein zusätzlicher, elektrischer Motor für den Betrieb des Verdichters 14 erforderlich ist.

## Patentansprüche

1. Antriebssystem (2) für ein Wasserfahrzeug, insbesondere für ein Unterwasserfahrzeug wie ein U-Boot oder ein unbemanntes Unterwasserfahrzeug, umfassend eine Brennstoffzellenanlage (6), mindestens einen Betriebsgasbehälter (4) zum Versorgen der Brennstoffzellenanlage (6) mit einem Betriebsgas (B), eine zwischen dem Betriebsgasbehälter (4) und der Brennstoffzellenanlage (6) angeordnete Turbine (10) zum Entspannen des Betriebsgases (B) vor seinem Eintritt in die Brennstoffstellenanlage (6) sowie einen an einer Gasableitung (16) angeordneten Verdichter (14) zum Verdichten eines Restgases (R) aus der Brennstoffstellenanlage (6), wobei der Verdichter (14) und die Turbine (10) ein gemeinsames Getriebesystem aufweisen.

2. Antriebssystem (2) nach Anspruch 1,
wobei das Betriebsgas (B) vor der Turbine (10) einen Druck von mindestens ca. 200 bar, insbesondere ca. 350, insbesondere ca. 700 bar und nach der Turbine (10) einen Druck von ca. 5-10 bar aufweist.

3. Antriebssystem (2) nach einem der vorhergehenden Ansprüche,
wobei zwischen dem Betriebsgasbehälter (4) und der Turbine (10) eine Entspannungsvorrichtung zur Vorentspannung des Betriebsgases (B) auf einen Druck zwischen 20 bar und 50 bar angeordnet ist.

4. Antriebssystem (2) nach einem der vorhergehenden Ansprüche,
wobei das verdichtete Restgas (R) einen Druck von ca. 5-50 bar aufweist.

5. Antriebssystem (2) nach einem der vorhergehenden Ansprüche,
wobei an der Gasableitung (16) ein Gasbehälter (18) für das Restgas (R) vorgesehen ist.

6. Antriebssystem (2) nach einem der vorhergehenden Ansprüche,
wobei die Gasableitung (16) außerhalb des Unterwasserfahrzeugs mündet.

7. Antriebssystem (2) nach einem der vorhergehenden Ansprüche,
wobei ein elektrischer Generator (20) mit der Turbine (10) gekoppelt ist.

8. Antriebssystem (2) nach einem der vorhergehenden Ansprüche,
wobei die Turbine (10) mit einem Antrieb des Fahrzeugs gekoppelt ist.

9. Verfahren zum Betrieb eines Antriebssystems (2) für ein Wasserfahrzeug, insbesondere für ein Unterwasserfahrzeug wie ein U-Boot oder ein unbemanntes Unterwasserfahrzeug, wobei ein Betriebsgas (B) aus mindestens einem Betriebsgasbehälter (4) in einer Turbine (10) entspannt wird, das entspannte Betriebsgas (B) anschließend in eine Brennstoffzellenanlage (6) zum Verbrennen eingeleitet wird, nach der Verbrennung des Betriebsgases (B) in der Brennstoffzellenanlage (6) Restgas (R) aus der Brennstoffzellenanlage (6) abgeleitet und mittels eines Verdichters (14) verdichtet wird, wobei der Verdichter (14) durch die Turbine (10) angetrieben wird.

10. Verfahren nach Anspruch 9,
wobei das Betriebsgas (B) in der Turbine (10) von einem Druck von mindestens ca. 200 bar, insbesondere ca. 350, insbesondere ca. 700 bar auf einen Druck von ca. 5-10 bar entspannt wird.

11. Verfahren nach einem der Ansprüche 9 oder 10,
wobei das Betriebsgas (B) vor der Turbine (10) auf einen Druck zwischen 20 bar und 50 bar vorentspannt wird.

12. Verfahren nach einem der Ansprüche 9 bis 11,
wobei das Restgas (R) auf einen Druck von ca. 5-50 bar verdichtet wird.

13. Verfahren nach einem der Ansprüche 9 bis 12,
wobei das Restgas (R) in einem Gasbehälter (18) gespeichert wird.

14. Verfahren nach einem der Ansprüche 9 bis 13,
wobei das verdichtete Restgas aus dem Unterwasserfahrzeug hinausgeleitet wird.

15. Verfahren (2) nach einem der Ansprüche 9 bis 14,
wobei ein elektrischer Generator (20) durch die Turbine (10) angetrieben wird.

16. Verfahren (2) nach einem der Ansprüche 9 bis 15,
wobei ein Antrieb des Wasserfahrzeugs durch die Turbine (10) angetrieben wird.

17. Wasserfahrzeug, insbesondere für ein Unterwasserfahrzeug wie ein U-Boot oder ein unbemanntes Unterwasserfahrzeug, mit einem Antriebssystem (2) nach einem der Ansprüche 1 bis 8.
